Europäisches Patentamt

European Patent Office

Office européen des brevets

(11) Publication number: **0 458 412 A1**

# (12) EUROPEAN PATENT APPLICATION

(21) Application number: 91201198.8

(22) Date of filing: 17.05.91

(51) Int. Cl.5: **A47L 15/24, //B65G47/57**

(30) Priority: 23.05.90 SE 9001878

(43) Date of publication of application:
27.11.91 Bulletin 91/48

(84) Designated Contracting States:
**BE DE DK ES FR GB NL**

(71) Applicant: **WEXIODISK AB**
**Mardvägen 4**
**S-352 45 Växjö(SE)**

(72) Inventor: **Eidevag, Thomas**
**Bokelundsvägen 5**
**S-342 00 Alvesta(SE)**

(74) Representative: **Wallengren, Yngvar**
**Patentbyran Y Wallengren AB Box 116**
**S-331 21 Värnamo(SE)**

(54) An apparatus for grasping and removing plates on trays.

(57) An apparatus for grasping and removing plates (3, 4) on trays (2) comprises a conveyor (1) for the trays (2). In order to permit reliable picking and sorting of different sizes of plates, the apparatus is provided, above the conveyor (1), with two pairs of endless belts (10, 11) circulating about rollers (9), the belts having mutually closely adjacent parts (12, 13, respectively) which run in the direction of movement of the conveyor (1), preferably slightly quicker than the conveyor, and which make an acute angle, generally between 5° and 15°, with the conveyor (1). The acute angle apex faces the direction of movement of the conveyor, and the closely adjacent parts (12, 13, respectively) of the belts grip therebetween the plates (3, 4) and lift them away from the trays. The first pair of belts (10) in the direction of movement of the conveyor (1) has the ends of the closely adjacent parts (12) most proximal the conveyor (1) disposed closer to the conveyor but at greater mutual spacing than the second pair (11).

Fig.1.

## TECHNICAL FIELD

The present invention relates to an apparatus for grasping and removing plates on trays. The apparatus includes a conveyor for the trays, and at least one accommodation device for the plates.

## BACKGROUND ART

In large catering facilities and in many restuarants, diners often themselves return their tray with used crockery carried thereon to a conveyor where waste is removed from both plates and the tray, whereafter washing takes place.

In practice, once the tray has been returned, manual removal of cutlery, plates etc. from the trays is often employed, whereafter the trays are washed separately, and cutlery and plates separately.

Naturally, such manual operation is time-consuming and, thereby, uneconomical.

Attempts have also been made to mechanically remove plates, cutlery and the like from trays which the diners have returned. Thus, for example by the use of rotary brushes, attempts have been made to displace the plates from the trays so that the plates may be treated separately. Similar attempts have been made by the use of various scraper devices and the like.

The mechanical apparatuses have proved to be less than reliable, and so it has not been possible to sort the plates according to size, nor to grasp the plates in a fully reliable manner. Installations of this type have also required a considerable amount of maintenance in the form of cleaning and similar operations.

## PROBLEM STRUCTURE

The present invention has for its object to realize an apparatus of the type mentioned by way of introduction, the apparatus being designed in such a manner as to permit reliable picking of plates from trays while avoiding any disadvantages in the form of necessary extensive cleaning work. The present invention also has for its object to realize an apparatus of superior operational reliability, compact construction and with the possibility for immediate size or type sorting of plates removed from the trays.

## SOLUTION

The objects forming the basis of the present invention will be attained if the apparatus intimated by way of introduction is characterized in that there is provided, over the conveyor, at least one pair of endless belts circulating over rollers or the like, the belts having closely adjacent parts which run in the direction of movement of the conveyor and which make an acute angle with the direction of movement of the conveyor, the acute angle facing this direction, the closely adjacent parts being located so as to grasp and hold a plate therebetween and to move the plate from the tray to the accommodation device, possibly by the intermediary of interconnected conveyor devices.

One particularly advantageous embodiment of the present invention is moreover characterized in that there are disposed, sequentially in the longitudinal direction of the conveyor, two pairs of circulating belts, the first pair, counting in the direction of movement of the conveyor, having the ends of their adjacent parts most proximal the conveyor located closer to the conveyor but at greater mutual spacing than is the case for the second pair.

As a result of these features, an apparatus will be realized which, with the first pair of circulating belts, may grasp and move, for example, a dinner plate, while the subsequently disposed pair of circulating belts may grasp a deep plate. Hereby, the possibility will be afforded of separating different types of plates.

Further advantages will be attained according to the present invention if the apparatus is also given one or more of the characterizing features as set forth in appended Claims 3-5 and 7-8.

## BRIEF DESCRIPTION OF THE ACCOMPANYING DRAWINGS

The present invention will now be described in greater detail hereinbelow with particular reference to the accompanying Drawings. In the accompanying Drawings:

Fig. 1     is a side elevation (partly in cross section) of the apparatus according to the invention;

Fig. 2     is a top plan view of the apparatus of Fig. 1;

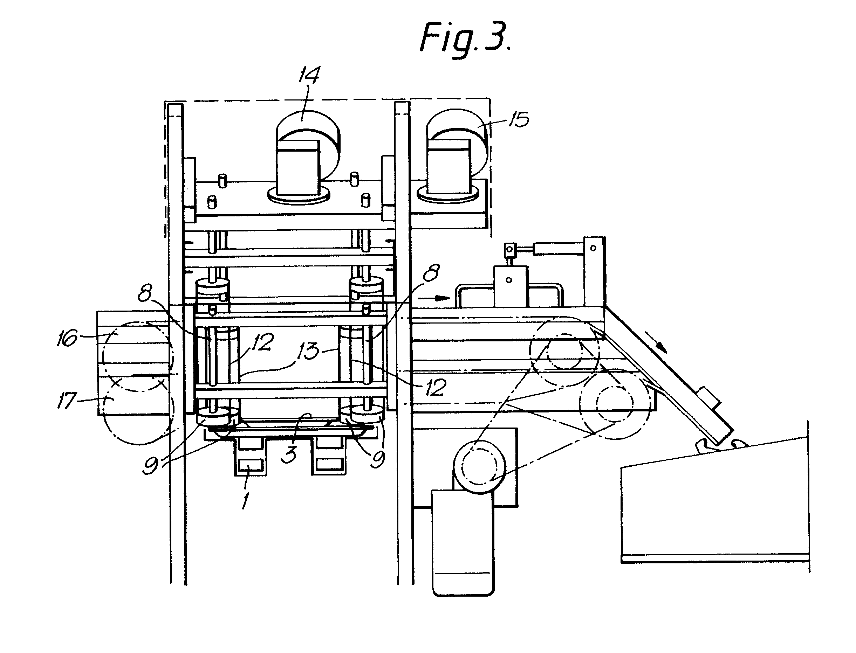

Fig. 3     shows the apparatus of Fig. 1 seen from the infeed end; and

Figs. 4-6  are cross sections through different embodiments of endless circulating belts employed in the apparatus according to the present invention.

## DESCRIPTION OF PREFERRED EMBODIMENT

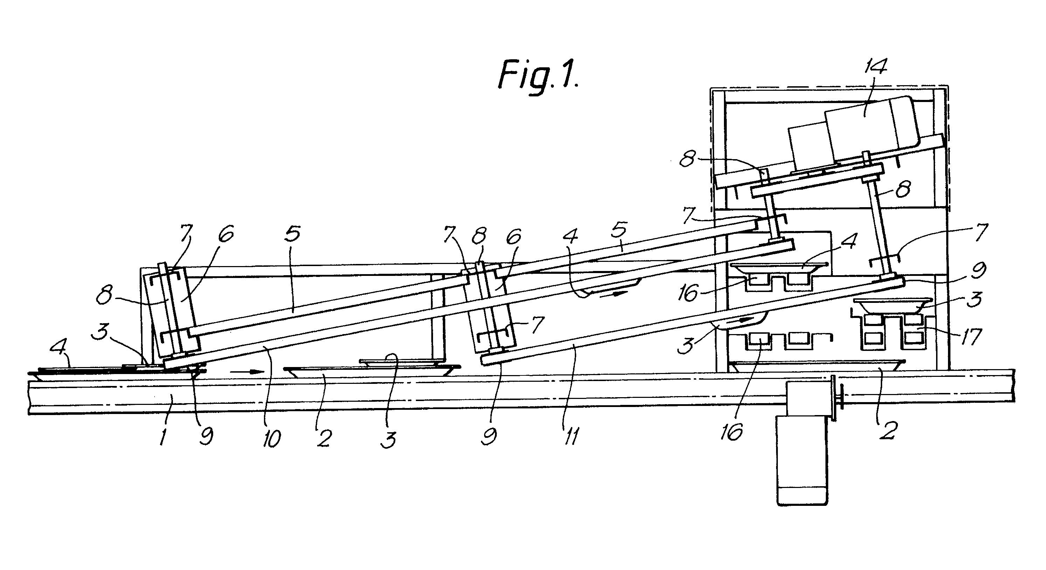

In Fig. 1, reference numeral 1 relates to a conveyor which is preferably horizontal and is intended to permit transport in a direction from left to right of trays 2 which carry plates such as a deep plate 3 and a dinner plate 4.

Concerning the plates, it should be noted that these are standardized so that, in one and the same plant, only one type of deep plate and one type of dinner plate is used. It will further be assumed that the deep plates are higher and of smaller diameter than the dinner plates. However, these requirements on dimensioning of the dinnerware should be considered as purely conventional.

The detailed design of the conveyor is not germane to the present invention, nor is the construction of the frame in which the conveyor is disposed.

In the frame which carries the conveyor, there is, however, fixedly secured an inclining frame which makes an acute angle with the direction of movement of the conveyor 1 in such a manner that the lower end of the frame 5 is located at the infeed end of the conveyor 1, whereafter, in the direction of movement of the conveyor, the distance between the conveyor and the frame 5 increases. The frame 5 is provided with downwardly directed components 6 which are connected via cross beams 7 fitted with journals (not shown in detail) for a number of shafts 8 making an angle with the vertical. In such instance, each cross beam 7 is provided with two shafts 8 and the shafts have, at their lower ends, wheels, rollers 9 or the like over which run circulating belts 10 and 11. The belts 10 and 11 have closely adjacent parts 12 and 13, respectively.

According to the invention, both of the circulating belts 10 run preferably in a common plane which, hence, also applies to the closely adjacent parts 12 of these belts. The closely adjacent parts make an acute angle with the direction of movement of the conveyor 1, preferably in the range of between 5 and 15°, but ideally an angle of approximately 10°. The larger the angle, the more rapidly the belts 10 and 11 distance themselves vertically from the conveyor 1 and the shorter will be the permitted construction distance of the subject matter of the present invention. In this instance, the angle apex is turned to face the direction of movement of the conveyor 1. The rollers 9 are located in such a manner that the distance in between the closely adjacent parts of the belts 10 will approximately correspond to the outer diameters of a dinner plate. Furthermore, the rollers 9 are vertically placed in such a manner that a central region of the closely adjacent parts, seen in the vertical direction, will be in register with the edge of the dinner plate 4.

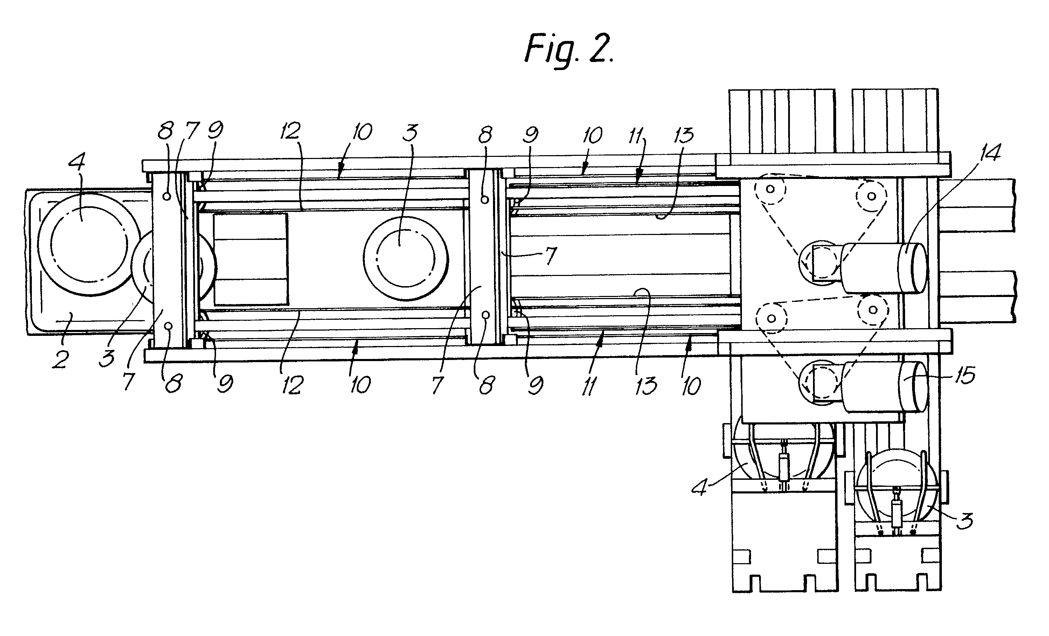

It will be apparent from the Drawings that the belts 10 and 11 are provided with drive means 14 and 15, in which the drive means 14 drive the uppermost belts 10 and 11 in Fig. 2 (to the left counting in the direction of movement), while the drive means 15 drive both of the lower belts 10 and 11 (to the right seen in the direction of movement). The direction of movement of the drive means 14 and 15 is selected in such a manner that the closely adjacent parts 12 and 13, respectively, of the belts move in the same direction as the conveyor. The slowest suitably applicable speed of the drive means 14 is a speed at which the closely adjacent parts have the same linear rate of transport as the conveyor 1. Preferably however, the drive means 14 and 15 drive the closely adjacent parts 12 and 13 at a slightly higher speed, for reasons which will be clarified below.

It is apparent from Fig. 2 and the foregoing description that, when a tray is advanced as intimated in the Figure in a direction to the right, the deep plate 3 will, because of its smaller diameter, pass between the rollers 9 of both belts 10. The deep plate will, thus, not be subjected to any action by the belts 10. When, on the other hand, dinner plates 4 arrive at the region of the rollers 9, the plates will be guided (possibly with the aid of funnel-shaped guide strips disposed just above the tray 2) in to the central region between the rollers 9, and the periphery of the plate will enter into engagement with the closely adjacent parts 12 of both belts 10. Hereat, the plate 4 will be grasped by the belts and, because of the upwardly directed movement of the belts in relation to the conveyor 1, the plate will be lifted by the belts and removed from the tray.

If the plate 4 grasped by the belts 10 were to be moving at a slower transport speed in a direction to the right than the speed of the conveyor 1, there would be the risk that the plate 4 could push other objects off the tray so that these ended up on the conveyor 1 or anywhere else where they might cause damage. Consequently, the slowest suitable speed of the belts 10 has been selected such that the transport speed of the grasped plate approximately coincides with the transport speed of the tray. However, advantages will be attained if the transport speed of the belts is slightly faster, so that the plate is lifted forwardly and upwardly from the tray.

In a corresponding manner to that which applies for the belts 10, the belts 11 are disposed with slightly smaller mutual spacing between the closely adjacent parts, and vertically somewhat higher than is the case for the belts 10. Hereby, the closely adjacent parts 13 will, in the manner described above, grasp and lift off a deep plate 3 which was not affected by the belts 10.

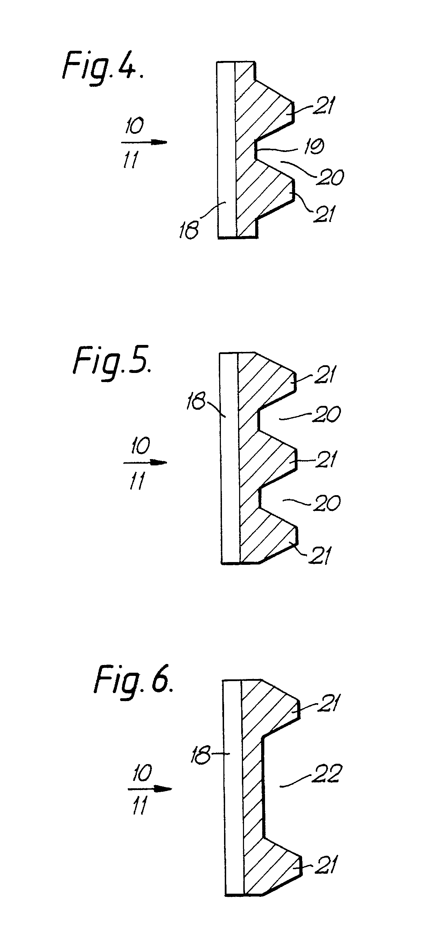

According to the present invention, the rollers or wheels 9 are ideally designed as cogged wheels which cooperate with the belts which, in turn, are designed as toothed belts with teeth 19 on their sides facing the rollers and gripping surfaces 19 on opposing sides (see Figs. 4-6). In order that these toothed belts, with their mutually facing parts 12, be capable of gaining a better grip on the plates 3 and 4, the mutually facing sides of the parts 12 are provided with longitudinal grooves 20 whose bottom surfaces form the gripping surfaces 19 and in which the edge portion of the plates may fit. In order to realize such a longitudinal groove 20, it is possible, on the "gripping face" of the toothed belt, to apply longitudinal beads 21 of approximately trapezoidal cross section which form therebetween the above-mentioned groove 20.

It will be apparent from the foregoing that the plates are held clamped and possibly in engagement with the grooves in the closely adjacent parts 12 and 13. Since the belts may be of relatively great length, of the order of a couple of metres, it will be perceived that the belts would require considerable tensioning if the grip between the belts and the plates were to be sufficient in the central region of the belts. In order to eliminate the requirement of such extreme tensioning of the belts, there are disposed, on the outside of the closely adjacent parts 12 and 13, guides, preferably in the form of long rails, which resiliently urge the closely adjacent parts 12 and 13 towards one another so that a reliable engagement may thereby be realized between the belts and the plates.

In order to make the apparatus according to the present invention operational, the shafts 8 are, at least in the forward (or lower) ends of the belts 10 and 11, adjustable so that the mutual spacing between the rollers or wheels 9 may also be varied in the vertical direction. Hereby, adjustment may readily be effected for handling of plates of different sizes and depths.

At the right-hand or upper ends of the belts 10 and 11 in Figs. 1 and 2, there are disposed transverse conveyors 16 and 17, respectively. In this instance, the transverse conveyor 16 is disposed at the upper ends of the belts 10 so that a plate 4 which has been moved by these belts is deposited on an upper part of the transverse conveyor in order to be displaced laterally thereby out to an accommodation device for dinner plates 4. Correspondingly, the conveyor 17 is provided with an upper discharge part immediately beneath the upper ends of the belts 11 so that hereby a deep plate which has been moved by these belts is deposited onto the conveyor 17 to be moved thereby to an accommodation device for deep plates 3.

It is also apparent from Fig. 1 that the upper discharge part of the transverse conveyor 16 is located beneath the belts 10 but above the belts 11, while the return part of the conveyor 16 is located beneath the belts 11.

## DESCRIPTION OF ALTERNATIVE EMBODIMENTS

The foregoing description has related to an apparatus which is designed to lift, from trays, dinnerware of two different sizes. Naturally, if desired, it is possible to dispense with one of the pairs of circulating belts 10 or 11 so that the apparatus will thereby exclusively be designed to handle one single dinnerware plate size.

Correspondingly, it will also be possible to employ an additional pair of circulating belts in order thereby to remove from trays an additional type or size of dinnerware.

In the foregoing, the endless belts 10, 11 have been described as running longitudinally with the conveyor 1. However, according to the present invention, it is also possible to laterally angle the belts so that the upper discharge ends of the belts are located outside and beside the conveyor 1. The connection of the discharge conveyor 16 and 17 may hereby be facilitated or, alternatively, these may be dispensed with entirely, so that the plates 3 and 4 are instead directly discharged into some form of accommodation device.

According to the present invention, it is also possible to cause the shafts 8 to incline so that their upper ends are closer to one another than their lower ends. Hereby, the closely adjacent parts 12 and 13, respectively, of the belts 10 and 11 will be lower than the outer return parts. In this embodiment, the lower strip which is disposed on the closely adjacent parts 12 and 13 respectively, of the belts 10 and 11 for forming the grooves may possibly be slightly larger than the upper strip.

In particular in such situations in which the angle between the belts 10 and 11 and the conveyor 1 is large, there may be a certain risk that a plate is not grasped by the belts in the correct manner, i.e. with the edge of the plate in the grooves 20, but with the edges obliquely above the grooves and in abutment with the tops of the strips 21. In order to facilitate the alignment and upward angling of the plates to the angle of the belts, guide means may be provided in the gripping region of the belts 10 and 11 at the rollers 9, with ramp surfaces which, from beneath, come into contact with edge portions of the plates and thereby raise the forward ends thereof in the direction of transport.

Another method of facilitating the take-up by the belts of plates is to curve the run of the belts so that the acute angle between the lower infeed ends of the belts 10 and 11 and also the lower rollers 9 and the direction of movement of the conveyor 1 is less than that of the upper regions of the belts. This may be achieved in that the belts are guided in guide rails of approximately C- or U-shaped cross section which may also be resiliently yieldable so as to urge the closely adjacent parts 12 and 13 of the belts towards one another. In this embodiment, the acute angle between the belts and the conveyor approximates zero, or may even be zero at the lower portions of the belts, in order subsequently to increase to relatively large angles, at least between 10° or 15° or more, at the upper portions of the belts. In this embodiment, the longitudinal reinforcement of steel or textile of the belts 10 and 11 is concentrated to the region at the centre of the belt (counting in the lateral direction). An embodiment of this type affords the advantage of shorter construction length for the apparatus, since the plates may be raised more steeply up from the trays.

The cross section illustrated in Fig. 4 of one belt has only a single groove 20 for accommodating plates 3 and 4. This implies that the lower rollers 9 for both of the belt pairs 10 and 11, respectively, must be adjusted at different vertical settings.

Fig. 5 shows an alternative cross section of a belt, and it will be apparent from this Figure that the belt has two grooves 20. In this instance, the rollers 9 for both of the belt pairs 10 and 11, respectively, may have the same vertical adjustment, since the positions of the lower grooves are adapted so as to engage with a shallow dinner plate 4 while the upper grooves fit a deep plate 3.

Fig. 6 illustrates yet a further alternative cross sectional configuration of the belt, and it will be apparent that this belt has two beads 21 and one interjacent wide groove 22. With the same vertical position of the rollers 9 to both of the belt pairs 10 and 11, respectively, this groove 22 grasps dinner plates 4 at a lower portion and deep plates 3 at an upper portion.

Further modifications are conceivable without departing from the spirit and scope of the appended Claims.

## Claims

1. An apparatus for grasping and removing plates (3, 4) on trays, the apparatus comprising a conveyor (1) for the trays (2) and at least one accommodation device for the plates, **characterized in that** there are provided, above the conveyor (1), at least one pair of endless belts (10, 11) circulating over rollers (9) or the like, the belts having closely adjacent parts (12, 13, respectively) which run in the direction of movement of the conveyor and make an acute angle with the direction of movement of the conveyor, the angle apex facing thereagainst, the closely adjacent parts being located so as to grasp and hold therebetween a plate (3, 4) on a tray (2) and to move same from the tray to the accommodation device, possibly by the intermediary of interconnected transport means (16, 17)

2. The apparatus as claimed in Claim 1, **characterized in that** the circulating belts (10, 11) have drive means (14, 15) which are designed so as to impart to the closely adjacent parts (12, 13) of the belts at least the same, but preferably slightly greater speed of movement than the conveyor (1).

3. The apparatus as claimed in Claim 1 or 2, **characterized in that** the belts (10, 11) are provided, on the mutually facing sides of the closely adjacent parts (12, 13, respectively), with grooves for accommodating edge portions of the plates (3, 4).

4. The apparatus as claimed in any one of Claims 1-3, **characterized in that** there are provided, on the sides of the closely adjacent parts (12, 13) facing away from one another, guide means which are intended to resiliently hold the closely adjacent parts against a plate (3, 4) located therebetween.

5. The apparatus as claimed in any one of Claims 1-4, **characterized in that** the angle between the closely adjacent parts (12, 13) and the direction of movement of the conveyor (1) is in the range of between 5 and 15°, preferably approximately 10°.

6. The apparatus as claimed in any one of Claims 1-5, **characterized in that** there are sequentially disposed, in the longitudinal direction of the conveyor, two pairs of circulating belts (10, 11), the first pair (10) counting in the direction of movement of the conveyor having the ends of its most proximally located parts (12) closest the conveyor disposed closer to the conveyor but at greater mutual spacing than the second pair (11).

7. The apparatus as claimed in any one of Claims 1-6, **characterized in that** there are disposed, between the ends of the closely adjacent parts (12, 13) located most distally from the conveyor (1) and the accommodation device or devices, respectively, one or two discharge conveyors (16, 17) directed transversely of the closely adjacent parts, or conveyors for receiving plates (3, 4) from the closely adjacent parts.

8. The apparatus as claimed in Claim 6 or 7, **characterized in that** the discharge conveyor (16) for the first pair of circulating belts (10) has one discharge part located above the second pair of circulating belts (11), while one return part is located therebeneath.

*Fig.1.*

EP 0 458 412 A1

Fig. 2.

EP 0 458 412 A1

Fig.3.

**Fig.4.**

$\dfrac{10}{11}$ →

21
19
20
21
18

**Fig.5.**

18
21
20
21
20
21

$\dfrac{10}{11}$ →

**Fig.6.**

$\dfrac{10}{11}$ →

21
18
22
21

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | DE,B2, 2 457 680 (KÜPPERSBUSCH AG) 10 June 1976 *See the whole document* | 1 | A 47 L 15/24// B 65 G 47/57 |
| A | DE,C2, 2 443 651 (MEIKO MASCHINEN- UND APPARATEBAU, INGENIUR OSKAR MEIER GMBH & CO) 1 April 1976 *See the whole document* | 1 | |
| A | DE,B2, 1 956 049 (MEIKO MASCHINEN- UND APPARATEBAU, INGENIUR OSKAR MEIER GMBH & CO) 27 May 1971 *See the whole document* | 1 | |
| A | DE,A1, 2 414 386 (SOCIETA ITALIANA PACKING SIPAK S.P.A. 16 October 1975 *See the whole document* | 3 | |
| A | CH,A, 542 766 (EMHART ZURICH S.A.) 30 November 1973 *See the whole document* | 1,3 | TECHNICAL FIELDS SEARCHED (Int. Cl 4) |
| A | US,A, 3 944 093 (BERGERON) 16 March 1976 *See the whole document* | 1 | A 47 L B 65 G |

The present search report has been drawn up for all claims

| Place of search | Date of completion of the search | Examiner |
|---|---|---|
| STOCKHOLM | 26.08.1991 | Lindkvist, B |